# EUROPEAN PATENT SPECIFICATION

(11) **EP 4 002 044 B1**
(45) Date of publication and mention of the grant of the patent: **22.05.2024**
(21) Application number: 20207663.4
(22) Date of filing: 13.11.2020
(51) Int. Cl.: H04W 4/44, G08G 1/09

(54) **METHODS, COMPUTER PROGRAMS, AND APPARATUSES FOR TELE-OPERATED DRIVING**
VERFAHREN, COMPUTERPROGRAMME UND VORRICHTUNGEN ZUR TELESKOPISCHEN ANSTEUERUNG
PROCÉDÉS, PROGRAMMES INFORMATIQUES ET APPAREILS DE CONDUITE TÉLÉCOMMANDÉE

(43) Date of publication of application: 25.05.2022
(73) Proprietor: VOLKSWAGEN AG, 38440 Wolfsburg (DE)
(72) Inventor: Jornod, Guillaume, 10245 Berlin (DE); Pfadler, Andreas, 13357 Berlin (DE); Reimann, Daniel, 38100 Braunschweig (DE)

(56) References cited:
- EP-A1- 3 618 022
- EP-A1- 3 706 454
- EP-A1- 3 772 226
- EP-B1- 3 618 022
- WO-A1-2019/180700
- US-A1- 2019 122 548
- Unknown: "The AASHTO National Connected Vehicle SPaT Deployment Challenge Implementation Guidance", , 20 October 2017 (2017-10-20), pages 1-8, XP055795388, Retrieved from the Internet: URL:https://transportationops.org/sites/tr ansops/files/SPaT%20Implementation%20Guida nce%20%20Draft%20ver%202.13%2010202017.pdf [retrieved on 2021-04-14]

## Description

The present invention, which is defined by the subject-matter of the claims, relates to methods, computer programs, and apparatuses for tele-operated driving, and in particular but not exclusively, to a concept for controlling a vehicle based on information on a timing of a predictable traffic event and a delay in controlling the vehicle from remote.

Tele-operated driving (ToD) might become a key technology in order to solve issues with L4/L5 (L4: highly automatic, L5: fully automatic) driven vehicles, such as interpretation issues or deadlocks (situations, which cannot be resolved by autonomous or automatic control mechanisms only). These issues occur when automatic driven vehicles (AV) are not able to interpret and to solve a situation (deadlock) due to unclear traffic conditions, e.g. an accident or a construction site. These vehicles may need external instruction from someone else to solve the situation, which can be a remote control center (CC). A ToO vehicle will be driven remotely in a ToO session by the CC and an operator therein, respectively.

The main concept of ToD is that the AV is remotely driven the CC. CC and AV may be far away from each other. They are connected via a radio communication system (e.g. 4^{th}, 5^{th} Generation mobile communication systems (4G, 5G)) and its backhaul. Therefore, a certain end-to-end (E2E) delay and data rate are to be expected. Hence, the AV may react delayed to traffic situations and, thus, impair a traffic flow when being controlled from remote.

Document EP 3 772 226 A1 proposes a method for a command center, which is configured to teleoperate a vehicle, comprises receiving input data from the vehicle and estimating a current uplink delay based on the input data from the vehicle. The method further comprises determining an estimated downlink and uplink delay based on the input data and the estimated current uplink delay and determining control information for the vehicle which allows to compensate the estimated downlink and uplink delay at least partly. The method further comprises transmitting information related to the control information to the vehicle.

Document US 2019/122548 A1 suggests a concept of a traffic light information providing system which includes a vehicle and a server configured to communicate with the vehicle and provides information on change in color of a traffic light to the vehicle. The vehicle transmits to the server, vehicle data including time information and position information of the vehicle at the time when the vehicle resumes running from a state of stop at an intersection. The server operates and stores a period of change from the red light to the green light of a traffic light provided at the intersection based on the vehicle data. The server transmits information indicating timing of change to the green light of the traffic light based on the stored period of change, to a vehicle which approaches the intersection.

Document EP 3 618 022 A1 relates to a concept of remote control for an automatic driving vehicle. Embodiments of this concept refer to a method which includes, after receiving a remote control request of an automatic driving vehicle, acquiring a target wireless channel of a target wireless network with the shortest communication delay from a plurality of candidate wireless channels of a plurality of candidate wireless networks in combination with the current geographic location of the automatic driving vehicle, and transmitting a corresponding control instruction to the automatic driving vehicle through the target wireless channel of the target wireless network.

Document WO 2019/180700 A1 refers to a concept which provides for selecting a tele-operator by respective latencies of multiple tele-operators for a tele-operated driving session with the selected tele-operator and operating the vehicle from remote using data of a traffic light.

Document EP 3 706 454 A1 relates to a method for determining a duplex resource scheme for a localized communication in a mobile communication system comprises obtaining information related to a plurality of planned maneuvers of a plurality of road users, wherein the plurality of planned maneuvers are related to an intersection. The method comprises predicting a plurality of radio resources required for a communication of the plurality of road users at the intersection based on the obtained information related to the plurality of planned maneuvers. The method further comprises determining the duplex resource scheme based on the predicted plurality of radio resources required for the communication of the plurality of road users at the intersection.

Document "Unknown: "The AASHTO National Connected Vehicle SPaT Deployment Challenge Implementation Guidance", 20 October 2017 (2017-10-20), pages 1-8, XP055795388" refers to a concept of a Dedicated Short Range Communications (DSRC) broadcasts of Signal Phase and Timing (SPaT) at multiple intersection locations in a corridor or network setting.

Document US 2017/0084172 A1 discloses a traffic control system including a plurality of traffic lights. Further, this document provides a concept for controlling a vehicle based on information on a signal status of a traffic light and without human interaction.

Document US 2012/0026014 A1 discloses a roadside equipment system for controlling traffic signals and other equipment. In particular, this concept provides for controlling traffic signals under consideration of vehicles in the environment.

Document CN 102122441 A relates to a concept for an intelligent traffic light backup system comprising a traffic lights control box and an onboard wireless module for a vehicle. The concept particularly provides for transmitting a traffic lights signal from the traffic lights control box to the onboard wireless module to inform a driver of the vehicle about a phase of traffic lights. Also, the concept provides for sending a clear and melodious prompt tone for reminding the driver to prepare for starting the vehicle.

None of the aforementioned documents deals with a solution to reduce the above delay of a remotely controlled vehicle in reacting to traffic situations.

Hence, there may be a demand for an improved concept for tele-operated driving.

Embodiments of the present disclosure are based on the finding that in tele-operated driving, instructions for a reaction of a vehicle to a predictable traffic event can be initiated by a remote control center before the traffic event occurs under consideration of a delay in controlling the vehicle from remote to reduce a delay of the vehicle in reacting to the predictable traffic event.

Embodiments provide a method for a remote control center and for controlling a vehicle from remote. The method comprises establishing a tele-operated driving session between the vehicle and the remote control center. Further, the method comprises obtaining information on a timing of a predictable traffic event. The method also comprises determining a delay in controlling the vehicle in the tele-operated driving session. The method further comprises controlling the vehicle in the tele-operated driving session based on the information on the timing and the delay. For example, the remote control center instructs the vehicle to react to the predictable traffic situation. The above method may serve to reduce a delay of the vehicle in reacting to the predictable traffic event.

In some embodiments, the information comprises information on a timing of a traffic light. This may allow the vehicle to react to actions of the traffic light with less delay.

The predictable event, for example, comprises an action of a traffic light. For example, the predictable traffic event comprises a change of the traffic light from "red" to "green". Accordingly, the information on the timing may such indicate phase changes when the traffic light changes its phase, e.g. to "green" or "red". This, e.g., enables the vehicle to react to phase changes with less delay or even before they occur.

In some embodiments, controlling the vehicle comprises instructing the vehicle, based on the information on the timing and the delay, to stop at the traffic light or to drive past the traffic light. For example, the vehicle may be instructed by the remote control center to start braking or accelerating based on or with respect to the timing of phase changes of the traffic light, e.g., to stop at or drive past the traffic light, in the sense of cross/pass/travel through an traffic area (e.g. an intersection or a road constriction) coordinated/controlled by the traffic light. This may lead to an improved traffic flow at the traffic light.

In some embodiments, controlling the vehicle comprises instructing the vehicle, based on the timing and the delay, to start the vehicle at the traffic light. This, e.g., enables the vehicle to start with less delay when the traffic light turns "green". This allows an improved traffic flow.

In some embodiments, the information on the timing comprises a signal phase and timing (SPaT) message. In this way, the SPaT message, which may be already used by the vehicle for safety or other applications, may be efficiently reused to obtain the timing of the traffic light.

In some embodiments, obtaining the information on the timing comprises receiving the information on the timing from the vehicle, another vehicle, or an infrastructure object. In this way, e.g., an (already) established communication link between the remote control center and the vehicle, another vehicle, or the infrastructure object for other uses may be reused for an improved efficiency.

In some embodiments, determining the delay comprises determining a latency of communication between the remote control center and the vehicle. Determining the delay may further comprise receiving from the vehicle a reaction delay in controlling the vehicle in the tele-operated driving session and determining the delay in controlling the vehicle using the latency and the reaction delay. The latency may comprise a duration for transmitting an instruction from the remote control center to the vehicle and the reaction delay may relate to a duration between receiving the instruction at the vehicle and executing the instruction by the vehicle. Aware of the latency and the reaction delay, the remote control center can determine an end-to-end delay for the delay in controlling the vehicle. This may further reduce the delay of the vehicle in reacting on the traffic event. In particular, this may allow the vehicle to react to the traffic event instantly when it occurs. E.g. the vehicle can be started instantly, when a traffic light turns "green".

In some embodiments, the method further comprises storing the information on the timing of the predictable traffic event. This may allow the remote control center to reuse the information. In particular, the information on the timing may be reusable if the predictable traffic event occurs repeatedly and/or periodically like, e.g., phase changes of a traffic light. For such predictable traffic events, the remote control center, e.g., may use the information on the timing again for controlling the vehicle or other vehicles when the predictable traffic event occurs again. In particular, the remote control center may then not need to receive the information on the timing again from any other entity (e.g. the vehicle, another vehicle, or an infrastructure object).

Embodiments of the present disclosure also provide a method for a vehicle. The method comprises establishing a tele-operated driving session between the vehicle and a remote control center. The method also comprises obtaining information on a timing of a predictable traffic event. Further, the method comprises determining a reaction delay for a reaction of the vehicle to a situation in the environment in the tele-operated driving session. Also, the method comprises transmitting the information on the timing and the reaction delay to the remote control center for controlling the vehicle in the tele-operated driving session based on the information on the timing and the reaction delay. Controlling the vehicle based on the information and the timing allows the remote control center to reduce a delay of the vehicle in reacting to the predictable traffic event when controlling the vehicle from remote.

In some embodiments, obtaining information on the timing comprises receiving the information on the timing from another vehicle or an infrastructure object. In this way, e.g., an (already) established communication link for other uses or services between the vehicle and another vehicle, or the infrastructure object may be efficiently reused.

In some embodiments, the method further comprises storing the information on the timing in a local database on the vehicle. In this way, the vehicle is enabled to reuse the information on the timing, e.g., when the vehicle faces the similar predictable traffic event (e.g. a periodically occurring traffic event) later again.

Further embodiments provide a computer program having a program code for performing at least one of the methods proposed herein, when the computer program is executed on a computer, a processor, or a programmable hardware component. A further embodiment is a computer readable storage medium storing instructions which, when executed by a computer, processor, or programmable hardware component, cause the computer to implement one of the methods described herein.

Further embodiments provide an apparatus for a vehicle. The apparatus comprises one or more interfaces configured to communicate in a communication network and a data processing circuit configured to control the one or more interfaces. The data processing circuit is further configured to execute one of the methods for a vehicle.

Further embodiments provide an apparatus for a remote control center. The apparatus comprises one or more interfaces configured to communicate in a communication network and a data processing circuit configured to control the one or more interfaces. The data processing circuit is further configured to execute one of the methods for a remote control center.

Further embodiments provide a vehicle comprising the proposed apparatus for a vehicle. Some other features or aspects will be described using the following non-limiting embodiments of apparatuses or methods or computer programs or computer program products by way of example only, and with reference to the accompanying figures, in which:
Fig. 1 schematically illustrates a timing of a traffic light and a remotely controlled vehicle in known concepts;
Fig. 2 illustrates a flowchart of an embodiment of a method for a remote control center;
Fig. 3 illustrates a block diagram of an embodiment of an apparatus for a remote control center;
Fig. 4 illustrates a flowchart of an embodiment of a method for a vehicle;
Fig. 5 illustrates a block diagram of an embodiment of an apparatus for a vehicle; and
Fig. 6 schematically illustrates an application of the proposed concept.

Various example embodiments will now be described more fully with reference to the accompanying drawings in which some example embodiments are illustrated. In the figures, the thicknesses of lines, layers or regions may be exaggerated for clarity. Optional components may be illustrated using broken, dashed, or dotted lines.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications, equivalents, and alternatives falling within the scope of the invention as defined by the claims.

Like numbers refer to like or similar elements throughout the description of the figures.

As used herein, the term "or" refers to a non-exclusive or, unless otherwise indicated (e.g., "or else" or "or in the alternative"). Furthermore, as used herein, words used to describe a relationship between elements should be broadly construed to include a direct relationship or the presence of intervening elements unless otherwise indicated. For example, when an element is referred to as being "connected" or "coupled" to another element, the element may be directly connected or coupled to the other element or intervening elements may be present. In contrast, when an element is referred to as being "directly connected" or "directly coupled" to another element, there are no intervening elements present. Similarly, words such as "between", "adjacent", and the like should be interpreted in a like fashion.

The terminology used herein is for the purpose of describing particular embodiments only and is not intended to be limiting of example embodiments. As used herein, the singular forms "a", "an" and "the" are intended to include the plural forms as well, unless the context clearly indicates otherwise. It will be further understood that the terms "comprises", "comprising", "includes" or "including", when used herein, specify the presence of stated features, integers, steps, operations, elements or components, but do not preclude the presence or addition of one or more other features, integers, steps, operations, elements, components or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

Tele-operated Driving (ToD) is becoming a key enabler for automated driving. ToD may help to solve deadlock situations which cannot be solved by an automated driving vehicle itself. ToD may also become a legal requirement for automated driving in an increasing number of countries.

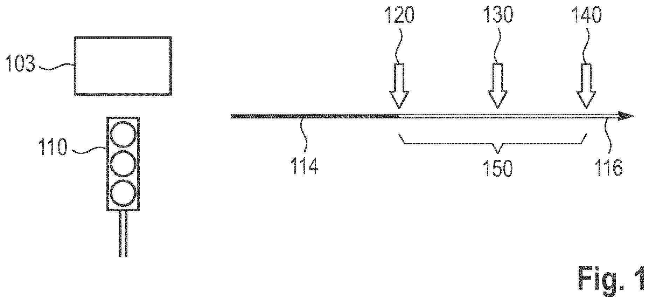

Due to latencies in communication and processing commands/instructions in ToD, a certain end-to-end (E2E) delay is to be expected. As schematically shown in Fig. 1, this may yield delays of a remotely controlled vehicle in reacting to a traffic event in the environment.

Fig. 1 schematically illustrates a timing of a traffic light and a remotely controlled vehicle in known concepts. In particular, Fig. 1 illustrates a scenario where a remote control center 103 remotely instructs a vehicle to start at a traffic light 110, e.g., because the vehicle is an autonomously/automatically driving vehicle and is not able to solve the current situation automatically. In order to enable the operator to control the vehicle, the vehicle may record image data of the traffic light 110 using a camera and provide the remote control center 103 with the image data of the traffic light 110. Thus, the operator of the control center can see when the traffic light 110 turns green and start the vehicle from remote after the traffic light 110 turned green.

Fig. 1 further shows a timing diagram illustrating a timing of a red phase 114 and a green phase 116 of the traffic light 110 (i.e. when the traffic light 110 is turned "red" or "green") over time.

In the scenario of Fig. 1, the vehicle is stationary during the red phase 114 of the traffic light 110 and the operator may send a command or instruction to start the vehicle at time 120 when the traffic light 110 switches from the red phase 114 to the green phase 116. Due to latencies of communication between the remote control center 103 and the vehicle, the vehicle may receive the command or instruction later at time 130. By reason of further latencies for processing the command or instruction, the vehicle may start even later at time 140. Thus, the latencies may cause a total-delay 150 from sending the command at time 120 to executing the command 140. Therefore, a start of the vehicle after the traffic light is turned green may be delayed and the vehicle may impair a traffic flow.

Hence, there is a demand for an improved concept for controlling a vehicle from remote.

This demand may be satisfied by the embodiments described below.

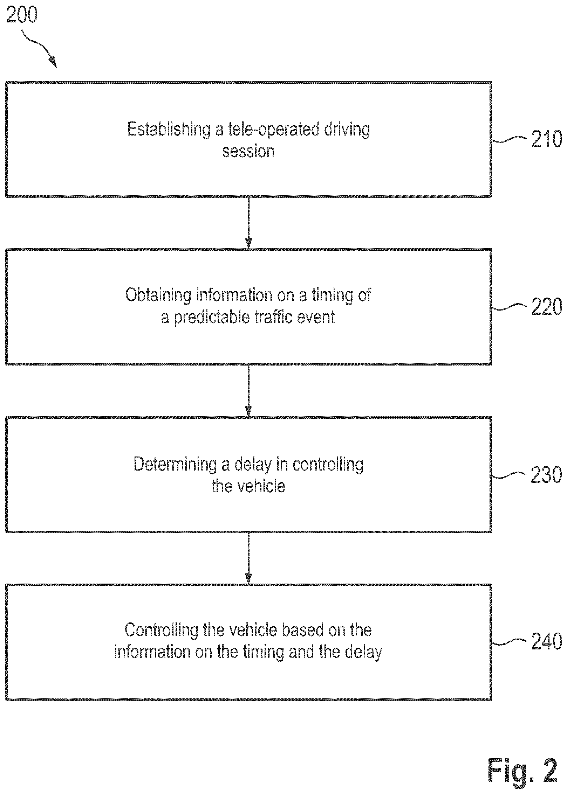

Fig. 2 illustrates a flowchart of an embodiment of a method 200 for a remote control center.

The method 200 comprises establishing 210 a tele-operated driving session between the vehicle and the remote control center. The tele-operated driving session can be understood as a part or the entirety of acts for controlling the vehicle from remote and for communicating between the vehicle and the remote control center. Establishing 210 the tele-operated driving session, e.g., comprises establishing a communication link to the vehicle and/or taking (at least partially) control over the vehicle.

The vehicle may be a car, a truck, a bus, or the like which is equipped for ToD. In particular, the vehicle may be an autonomously/automatically or at least semi-autonomously/semiautomatically driving vehicle.

Further, method 200 comprises obtaining 220 information on a timing of a predictable traffic event. The predictable traffic event, e.g., corresponds or comprises predictable and/or predetermined maneuvers of autonomously or semi-autonomously driving vehicles in the environment of the vehicle controlled by the remote control center. Accordingly, the information on the timing may comprise a timing of such a vehicle and/or, e.g., information on a maneuver and/or a timing of the maneuver. The information on the timing thus may indicate whether and/or when another vehicle turns right or left, accelerates or brakes. The skilled person having benefit from the present disclosure will appreciate that the information on the timing optionally may comprise other or further information on a maneuver and/or a position of a vehicle or other traffic participants in the environment of the (remotely controlled) vehicle. Optionally, the predictable traffic event comprises one or more actions of a traffic light and/or of a barrier. Accordingly, the information on the timing may comprise a timing of a traffic light, e.g., when the traffic light changes between phases (e.g. "green", "yellow", and "red") of the traffic light, or of a barriers, e.g., when the barrier opens or closes. In some embodiments, the information on the timing comprises a signal phase and timing (SPaT) message which may comprise the timing of the traffic light.

Obtaining 220 the information on the timing may comprise receiving the information from the vehicle, from another vehicle, and/or from an infrastructure object. The infrastructure object, e.g., is a server for communication with vehicles and/or other infrastructure objects (e.g. a traffic light) or the infrastructure object is an entity which comprises and/or has control over the traffic light and/or one or more barriers. The remote control center may use one or a combination of different technologies, networks (e.g. wireless local area network or cellular network) and/or different standards (e.g. from 3^{rd} Generation Partnership Project, 3GPP, or Institute of Electrical and Electronics Engineers, IEEE) for receiving the information on the timing.

Also, method 200 comprises determining 230 a delay in controlling the vehicle in the tele-operated driving session. The delay in controlling the vehicle comprises one or a combination of latencies in generating, processing, transmitting, and executing one or more instructions/commands of the remote control center for controlling the vehicle. In particular, the delay may comprise a latency for generating such an instruction and for processing the instruction at the remote control center, transmitting the instruction, and processing and executing the instruction at the (remotely controlled) vehicle. The latency for processing and executing the instruction at the vehicle can be also referred to as reaction delay.

In some embodiments, determining 230 the delay comprises determining a latency of communication between the remote control center and the vehicle, receiving from the vehicle the reaction delay in controlling the vehicle in the tele-operated driving session and determining the delay in controlling the vehicle using the latency and the reaction delay. The remote control center, e.g., may take measurements, e.g., round-trip-time (RTT) or time-to-first-byte (TTFB) measurements, to determine the latency of the communication. The vehicle can determine the reaction delay, e.g., based on measurements of a delay for processing and executing previous instructions from the remote control center.

In some embodiments, the remote control center receives the latency of the communication

Optionally, the delay comprises an end-to-end delay which is a combination of delays from initiating the instruction at the remote control center and executing the instruction. Optionally, the delay in controlling the vehicle may comprise a reaction time of the operator at the remote control center for reacting to the traffic event and inputting the instruction.

Further, method 200 comprises controlling 240 the vehicle in the tele-operated driving session based on the information on the timing and the delay. Controlling 240 the vehicle, e.g., comprises initiating an instruction for the vehicle by a duration of the delay before the predictable traffic event occurs in accordance with the information on the timing. In this way, a delay in reacting to the predictable traffic event may be reduced.

Controlling 240 the vehicle, e.g., comprises instructing the vehicle, based on the information on the timing and the delay, to stop at the traffic light or to drive past the traffic light, in the sense of proceeding or starting the vehicle to drive past the traffic light. E.g., the remote control center may instruct the vehicle, based on the timing and the delay, to react, e.g. to start, accelerate, or brake, to changes of a phase of the traffic light (e.g. from "red" to "green" or "yellow" or vice versa). This may enable less abrupt braking maneuvers and starting the vehicle with less delay after the traffic light turns green. In particular, the proposed concept may enable the vehicle to start instantly when the traffic light turns green. In this way, also a traffic flow may be enhanced. The skilled person having benefit from the present disclosure will appreciate that the proposed concept also applies to traffic lights using other colors, signs, or equivalent measures for instructing vehicles and/or traffic participants to drive past or to stop at the traffic light.

The method 200 may further comprise storing the information on the timing of the predictable traffic event, e.g., to enable the remote control center to reuse the information on the timing.

The information on the timing, e.g., comprises a schedule indicating changes of phases of the traffic light for one or more hours or days and the remote control center may reuse the schedule for controlling the vehicle or other vehicles in the environment of the traffic light later again based on the schedule.

Method 200 can be performed by an apparatus as described below.

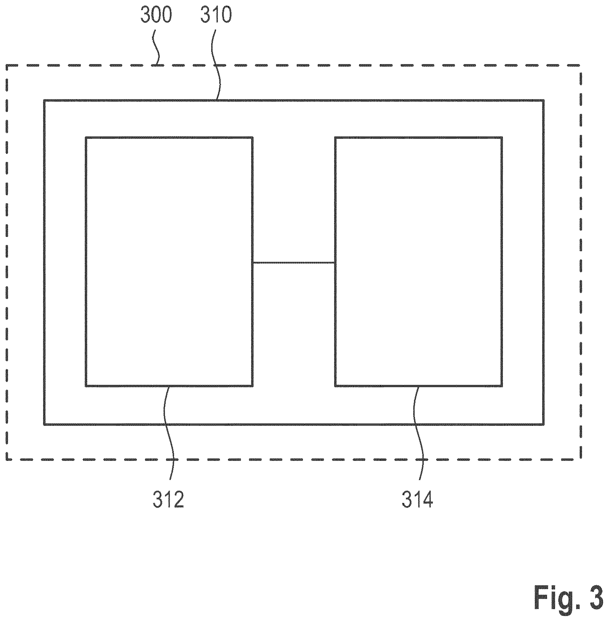

Fig. 3 illustrates a block diagram of an embodiment of an apparatus 310 for a remote control center.

The apparatus 310 comprises one or more interfaces 312 configured to communicate in a communication network and a data processing circuit 314 configured to control the one or more interfaces 312 The data processing circuit 314 is configured to execute the proposed method for a remote control center. As indicated by dashed lines in Fig. 3, the apparatus 310 may optionally be installed at a remote control center 300 for controlling a vehicle from remote.

In embodiments, the one or more interfaces 312 may correspond to any means for obtaining, receiving, transmitting or providing analog or digital signals or information, e.g. any connector, contact, pin, register, input port, output port, conductor, lane, etc. which allows providing or obtaining a signal or information. An interface may be wireless or wireline and it may be configured to communicate, i.e. transmit or receive signals, information with further internal or external components. The one or more interfaces 312 may comprise further components to enable according communication with the vehicle and/or infrastructure object and/or traffic entities. Such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc. The one or more interfaces 312 may be coupled to one or more antennas, which may correspond to any transmit and/or receive antennas, such as horn antennas, dipole antennas, patch antennas, sector antennas etc. In some examples the one or more interfaces 312 may serve the purpose of establishing the tele-operated driving session and communicating with the vehicle in the tele-operated driving session. Also, the one or more interfaces 312 may serve as means for obtaining the information on the timing of the predictable traffic event and the delay in controlling the vehicle (e.g. in the manner described above in connection with method 200).

As shown in Fig. 3 the respective one or more interfaces 312 are coupled to the data processing circuit 314 of the apparatus 310. In embodiments the communication circuit 314 may be implemented using one or more processing units, one or more processing devices, any means for processing, such as a processor, a computer or a programmable hardware component being operable with accordingly adapted software. In other words, the described functions of the data processing circuit 314 may as well be implemented in software, which is then executed on one or more programmable hardware components. Such hardware components may comprise a general-purpose processor, a Digital Signal Processor (DSP), a micro-controller, etc.

The remote control center 300 can also comprise further means (e.g. one or more displays, speakers, cameras, and/or microphones) for communication between an operator and the vehicle.

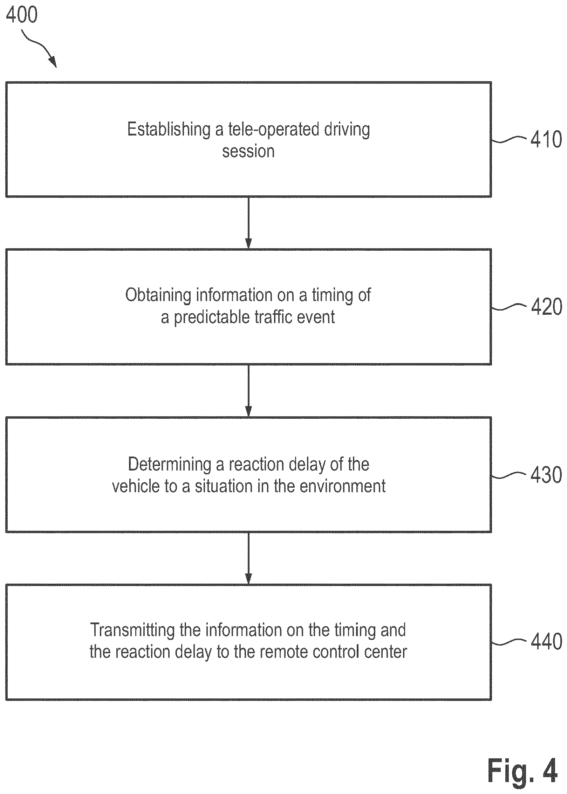

Some applications of method 200, remote control center 300, and/or apparatus 310, involve interaction with a concept implemented in the (remotely controlled) vehicle. Such a concept is described below with reference to Fig. 4.

Fig. 4 illustrates a flowchart of an embodiment of a method 400 for a vehicle.

Method 400 comprises establishing 410 a tele-operated driving session between the vehicle and a remote control center. Establishing 410 the tele-operated driving session, e.g., comprises establishing a communication link to the remote control center and/or transferring (at least partially) control over the vehicle to the remote control center.

Further, method 400 comprises obtaining 420 information on a timing of a predictable traffic event. Obtaining 420 information on the timing, e.g., comprises receiving the information on the timing from another vehicle or an infrastructure object. The vehicle, e.g., receives the information on the timing via communication with one or more other vehicles and/or with the infrastructure object using one or a combination of different technologies, networks and/or different standards (e.g. from the 3^{rd} Generation Partnership Project, 3GPP, or the Institute of Electrical and Electronics Engineers, IEEE). As outlined above, the predictable traffic event may comprise one or more predictable and/or predetermined maneuvers of one or more other vehicles and/or traffic participants and/or the predictable traffic event may comprise one or more actions of one or more traffic lights and/or barriers.

Also, method 400 comprises determining 430 a reaction delay for a reaction of the vehicle to a situation in the environment in the tele-operated driving session. As outlined above, the reaction delay may comprise a duration between receiving an instruction from the remote control center at the vehicle and executing the instruction by the vehicle. The vehicle, e.g., determines the reaction delay from one or more measurements of this duration for one or more previously received instructions from the remote control center.

Further, method 400 comprises transmitting 440 the information on the timing and the reaction delay to the remote control center for controlling the vehicle in the tele-operated driving session based on the information on the timing and the reaction delay. In this way, the vehicle, e.g., enables the remote control center to provide the vehicle with instructions before the predictable traffic event and with respect to the reaction delay in order to reduced a delay of the vehicle in reacting to the predictable traffic event.

Method 400 may further comprise storing the information on the timing in a local database on the vehicle. This allows the vehicle to reuse the information on the timing and may avoid communicating the information repeatedly, as outlined above in connection with method 200.

Method 400, e.g., is executed by an apparatus, as described below.

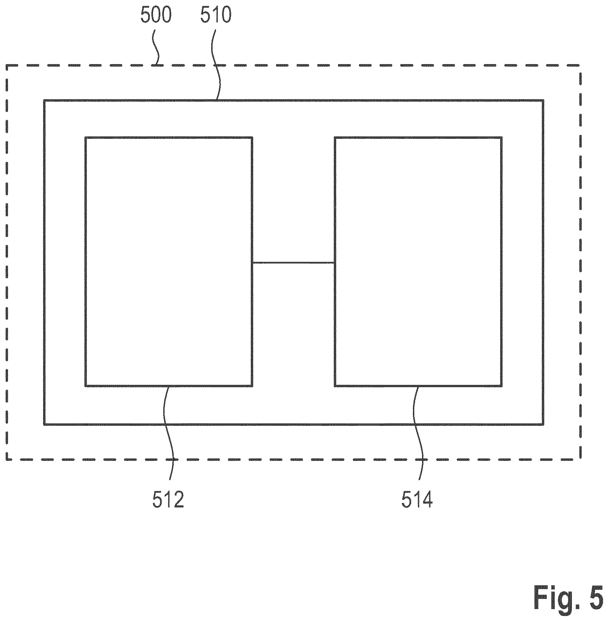

Fig. 5 illustrates a block diagram of an embodiment of an apparatus 510.

The apparatus 510 comprises one or more interfaces 512 configured to communicate in a communication network. Also, the apparatus 510 comprises a data processing circuit 514 configured to control the one or more interfaces 512. The data processing circuit 514 is further configured to execute method 500.

As indicated by dashed lines in Fig. 5, the apparatus 510 may optionally be installed on a vehicle 500.

In embodiments, the one or more interfaces 512 may correspond to any means for obtaining, receiving, transmitting or providing analog or digital signals or information, e.g. any connector, contact, pin, register, input port, output port, conductor, lane, etc. which allows providing or obtaining a signal or information. An interface may be wireless or wireline and it may be configured to communicate, i.e. transmit or receive signals, information with further internal or external components. The one or more interfaces 512 may comprise further components to enable in accordance with an embodiment of method 500 communication with the remote control center, one or more other vehicles and/or an infrastructure object and/or traffic entities. Such components may include transceiver (transmitter and/or receiver) components, such as one or more LNAs, one or more PAs, one or more duplexers, one or more diplexers, one or more filters or filter circuitry, one or more converters, one or more mixers, accordingly adapted radio frequency components, etc. The one or more interfaces 512 may be coupled to one or more antennas, which may correspond to any transmit and/or receive antennas, such as horn antennas, dipole antennas, patch antennas, sector antennas etc. In some examples the one or more interfaces 512 may serve the purpose of establishing the tele-operated driving session and communicating with the remote control center in the tele-operated driving session. Also, the one or more interfaces 512 may serve as means for obtaining the information on the timing of the predictable traffic event and the reaction delay (e.g. in the manner described above in connection with method 500).

As shown in Fig. 5 the respective one or more interfaces 512 are coupled to the data processing circuit 514 of the apparatus 510. In embodiments the communication circuit 514 may be implemented using one or more processing units, one or more processing devices, any means for processing, such as a processor, a computer or a programmable hardware component being operable with accordingly adapted software. In other words, the described functions of the data processing circuit 514 may as well be implemented in software, which is then executed on one or more programmable hardware components. Such hardware components may comprise a general-purpose processor, a DSP, a micro-controller, etc.

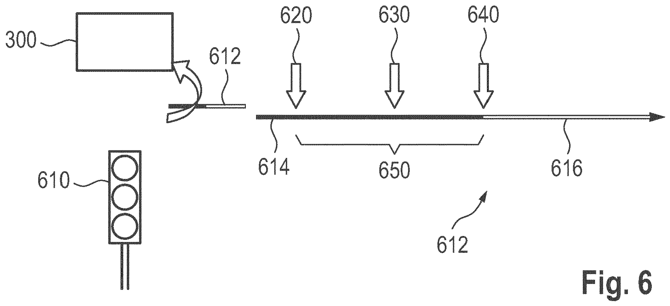

Fig. 6 schematically illustrates an application of the proposed concept (e.g. of the proposed methods, computer programs, and/or apparatuses).

More precisely, Fig. 6 illustrates an exemplary scenario where a (autonomously/automatically driving) vehicle is controlled a traffic light 610 by tele-operated driving, e.g., due to a deadlock situation for the vehicle.

To this end, the vehicle and a remote control center (e.g. remote control center 300) may establish a tele-operated driving session and transfer control over the vehicle to the remote control center 300 in response to detecting the deadlock situation. For example, the vehicle detects the deadlock situation and triggers the tele-operated driving session, which lead to a connection to the remote control center 300.

According to the proposed concept, the remote control center 300 can receive information 612 on a timing of the traffic light 610. As can be seen from Fig. 6, the remote control center 300, e.g., receives the information 612 from the traffic light 610 or an entity/server which has control over the traffic light 610. Alternatively, the vehicle may obtain the information 612 (e.g. from the traffic light 610 or the entity/server) and forwards the information 612 to the remote control center 300.

The information in particular indicates a timing of a red phase 614 and a green phase 616 of the traffic light 610. By way of illustration the timing of the red phase 614 and the green phase 616 is plotted over time in Fig. 6. As one can see from Fig. 6, the traffic light 610 switches from the red phase 614 to the green phase 616. In practice, such a phase change from the red phase 614 to the green phase 616 happens at a predetermined point in time. That is, the phase change can be understood as a predictable traffic event. The information 612 on the timing of the traffic light 610 may particularly indicate when (i.e. at which point in time) the traffic light 610 switches from the red phase 614 to the green phase 616. In particular, the information 612 may comprise a SPaT message. The information 612 on the timing and/or the SPaT message may also or alternatively indicate a schedule and/or a periodicity of phase changes and/or phases of the traffic light 610 within one or more hours or days.

The remote control center 300 may further obtain the delay in the above mentioned manner. Thus, the remote control center 300 may obtain a total delay 650 including a duration from sending a command/instruction at time 620 to receiving the command/instruction at time 630 and the reaction delay of the vehicle including a duration from receiving the command/instruction at time 630 to executing the command/instruction by the vehicle at time 640. To this end, the vehicle may (regularly) send an estimate of its internal delay (e.g. the duration from time 630 to time 640) to the remote control center 300 and the remote control center 300 may estimate the latency/delay of communication of the command/instruction between time 620 and 630 (Downlink: remote control center -> vehicle). Thus, the remote control center 300 can compute the total delay 650 and can prepare instructing the vehicle and use the total delay 650 to "compensate" it.

In the scenario of Fig. 6, the command/instruction may be configured to cause the vehicle to start. Considering the total delay 650, the remote control center 300 may send the command/instruction before the phase change to reduce the delay of the vehicle in reacting to the phase change. In particular, the remote control center 300 may send the command/instruction by or within the total delay 650 before the phase change. Thus, the delay of the vehicle in reacting to the phase change may be reduced. Preferably, the remote control center 300 sends the command/instruction by the total delay 650 before the phase change to cause the vehicle to start instantly at the phase change.

The remote control center 300, e.g., is configured to indicate to the operator, e.g. using a signal, when the operator should trigger the command/instruction to start the vehicle such that the vehicle starts when the traffic light 610 switches from the red phase 614 to the green phase 616, i.e. when the traffic light 610 turns "green".

The remote control center 300 may further store the information 612 on the timing and/or reuse the information 612 for controlling one or more other vehicles according to the proposed concept.

The skilled person having benefit from the present disclosure will appreciate that the concept described by reference to Fig. 6 also applies to other predictable traffic events, other traffic lights, other information on the timing, and/or other delays in controlling the vehicle.

A person of skill in the art would readily recognize that steps of various above-described methods can be performed by programmed computers, for example, positions of slots may be determined or calculated. Herein, some embodiments are also intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art and are to be construed as being without limitation to such specifically recited examples and conditions

When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, Digital Signal Processor (DSP) hardware, network processor, application specific integrated circuit (ASIC), field programmable gate array (FPGA), read only memory (ROM) for storing software, random access memory (RAM), and non-volatile storage. Other hardware, conventional or custom, may also be included. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

### List of reference signs

- 103: remote control center
- 110: traffic light
- 114: red phase
- 116: green phase
- 120: time
- 130: time
- 140: time
- 150: total delay
- 200: method for a remote control center
- 210: establishing a tele-operated driving session
- 220: obtaining information on a timing of a predictable traffic event
- 230: determining a delay in controlling the vehicle
- 240: controlling the vehicle based on the information on the timing and the delay
- 300: remote control center
- 310: apparatus for a remote control center
- 312: one or more interfaces
- 314: data processing circuit
- 400: method for a vehicle
- 410: establishing a tele-operated driving session
- 420: obtaining information on a timing of a predictable traffic event
- 430: determining a reaction delay of the vehicle to a situation in the environment
- 440: transmitting the information on the timing and the reaction delay to the remote control center
- 500: vehicle
- 510: apparatus for a vehicle
- 512: one or more interfaces
- 514: data processing circuit
- 610: traffic light
- 612: information on a timing of the traffic light
- 614: red phase
- 616: green phase
- 620: time
- 630: time
- 640: time
- 650: total delay

## Claims

1. A method (200) for a remote control center (300) and for controlling a vehicle from remote, the method (200) comprising:
establishing (210) a tele-operated driving session between the vehicle and the remote control center (200);
obtaining (220) information (612) on a timing of a predictable traffic event;
determining (230) a delay in controlling the vehicle in the tele-operated driving session; and
controlling (240) the vehicle in the tele-operated driving session before the predictable traffic event occurs based on the information (612) on the timing and the delay.

2. The method (200) of claim 1, wherein the information (612) on the timing comprises information on a timing of a traffic light (610).

3. The method (200) of claim 2, wherein controlling (240) the vehicle comprises instructing the vehicle, based on the information (612) on the timing and the delay, to stop at the traffic light (610) or to drive past the traffic light (610).

4. The method (200) of claim 2 or 3, wherein controlling (240) the vehicle comprises instructing the vehicle, based on the information (612) on the timing and the delay, to start the vehicle at the traffic light (610).

5. The method (200) of any one of claims 2 to 4, wherein the information (612) on the timing comprises a signal phase and timing, SPaT, message.

6. The method (200) of any one of the preceding claims, wherein obtaining (220) the information (612) on the timing comprises receiving the information (612) on the timing from the vehicle, another vehicle, or an infrastructure object.

7. The method (200) of any one of the preceding claims, wherein determining (230) the delay comprises:
determining a latency of communication between the remote control center (300) and the vehicle;
receiving from the vehicle a reaction delay in controlling the vehicle in the tele-operated driving session; and
determining the delay in controlling the vehicle using the latency and the reaction delay.

8. The method (200) of any one of the preceding claims, wherein the method (200) further comprises storing the information (612) on the timing of the predictable traffic event.

9. A method (400) for a vehicle, the method (400) comprising:
establishing (410) a tele-operated driving session between the vehicle and a remote control center (300);
obtaining (420) information (612) on a timing of a predictable traffic event;
determining (430) a reaction delay for a reaction of the vehicle to a situation in the environment in the tele-operated driving session; and
transmitting (440) the information (612) on the timing and the reaction delay to the remote control center (300) for controlling the vehicle in the tele-operated driving session before the predictable traffic event occurs based on the information (612) on the timing and the reaction delay.

10. The method (400) of claim 9, wherein obtaining (420) information (612) on the timing comprises receiving the information (612) on the timing from another vehicle or an infrastructure object.

11. The method (400) of claim 9 or 10, wherein the method (400) further comprises storing the information (612) on the timing in a local database on the vehicle.

12. A computer program product having a program code for performing at least one of the methods (200, 400) of claims 1 to 11, when the computer program product is executed on a computer, a processor, or a programmable hardware component.

13. An apparatus (310) for a remote control center (300), the apparatus (310) comprising:
one or more interfaces (312) configured to communicate in a communication network; and
a data processing circuit (314) configured to control the one or more interfaces (312), wherein the data processing circuit (314) is further configured to execute one of the methods (200) of claims 1 to 8.

14. An apparatus (510) for a vehicle (500), the apparatus (510) comprising:
one or more interfaces (512) configured to communicate in a communication network; and
a data processing circuit (514) configured to control the one or more interfaces (512), wherein the data processing circuit (514) is further configured to execute one of the methods (400) of claims 9 to 11.

## Patentansprüche

1. Verfahren (200) für eine Fernsteuerzentrale (300) und zum Steuern eines Fahrzeugs aus einer Entfernung, das Verfahren (200) umfassend:
Einrichten (210) einer telebetriebenen Fahrsitzung zwischen dem Fahrzeug und der Fernsteuerzentrale (200);
Erhalten (220) von Informationen (612) über eine Zeitplanung eines vorhersagbaren Verkehrsereignisses;
Bestimmen (230) einer Verzögerung bei dem Steuern des Fahrzeugs in der telebetriebenen Fahrsitzung; und
Steuern (240) des Fahrzeugs in der telebetriebenen Fahrsitzung, bevor das vorhersagbare Verkehrsereignis basierend auf den Informationen (612) über die Zeitplanung und der Verzögerung auftritt.

2. Verfahren (200) nach Anspruch 1, wobei die Informationen (612) über die Zeitplanung Informationen über eine Zeitplanung einer Ampel (610) umfassen.

3. Verfahren (200) nach Anspruch 2, wobei das Steuern (240) des Fahrzeugs ein Anweisen des Fahrzeugs basierend auf den Informationen (612) über die Zeitplanung und der Verzögerung umfasst, um an der Ampel (610) zu stoppen oder an der Ampel (610) vorbeizufahren.

4. Verfahren (200) nach Anspruch 2 oder 3, wobei das Steuern (240) des Fahrzeugs das Anweisen des Fahrzeugs basierend auf den Informationen (612) über die Zeitplanung und der Verzögerung umfasst, um das Fahrzeug an der Ampel (610) zu starten.

5. Verfahren (200) nach einem der Ansprüche 2 bis 4, wobei die Informationen (612) über die Zeitplanung eine Signalphasen- und Zeitplanungsnachricht, SPaT-Nachricht, umfassen.

6. Verfahren (200) nach einem der vorstehenden Ansprüche, wobei das Erhalten (220) der Informationen (612) über die Zeitplanung das Empfangen der Informationen (612) über die Zeitplanung von dem Fahrzeug, einem anderen Fahrzeug oder einem Infrastrukturobjekt umfasst.

7. Verfahren (200) nach einem der vorstehenden Ansprüche, wobei das Bestimmen (230) der Verzögerung umfasst:
Bestimmen einer Latenzzeit der Kommunikation zwischen dem Fernsteuerzentrale (300) und dem Fahrzeug;
Empfangen von dem Fahrzeug einer Reaktionsverzögerung bei dem Steuern des Fahrzeugs in der telebetriebenen Fahrsitzung; und
Bestimmen der Verzögerung bei dem Steuern des Fahrzeugs unter Verwendung der Latenzzeit und der Reaktionsverzögerung.

8. Verfahren (200) nach einem der vorstehenden Ansprüche, wobei das Verfahren (200) ferner ein Speichern der Informationen (612) über die Zeitplanung des vorhersagbaren Verkehrsereignisses umfasst.

9. Verfahren (400) für ein Fahrzeug, das Verfahren (400) umfassend:
Einrichten (410) einer telebetriebenen Fahrsitzung zwischen dem Fahrzeug und einer Fernsteuerungszentrale (300);
Erhalten (420) von Informationen (612) über eine Zeitplanung eines vorhersagbaren Verkehrsereignisses;
Bestimmen (430) einer Reaktionsverzögerung für eine Reaktion des Fahrzeugs auf eine Situation in der Umgebung in der telebetriebenen Fahrsitzung; und
Übertragen (440) der Informationen (612) über die Zeitplanung und der Reaktionsverzögerung an die Fernsteuerungszentrale (300) zum Steuern des Fahrzeugs in der telebetriebenen Fahrsitzung, bevor das vorhersagbare Verkehrsereignis basierend auf den Informationen (612) über die Zeitplanung und der Reaktionsverzögerung auftritt.

10. Verfahren (400) nach Anspruch 9, wobei das Erhalten (420) von Informationen (612) über die Zeitplanung das Empfangen der Informationen (612) über die Zeitplanung von einem anderen Fahrzeug oder einem Infrastrukturobjekt umfasst.

11. Verfahren (400) nach Anspruch 9 oder 10, wobei das Verfahren (400) ferner das Speichern der Informationen (612) über die Zeitplanung in einer lokalen Datenbank auf dem Fahrzeug umfasst.

12. Computerprogrammprodukt, das einen Programmcode zum Durchführen mindestens eines der Verfahren (200, 400) nach den Ansprüchen 1 bis 11 aufweist, wenn das Computerprogrammprodukt auf einem Computer, einem Prozessor oder einer programmierbaren Hardwarekomponente ausgeführt wird.

13. Einrichtung (310) für eine Fernsteuerungszentrale (300), die Einrichtung (310) umfassend:
eine oder mehrere Schnittstellen (312), die konfiguriert sind, um in einem Kommunikationsnetzwerk zu kommunizieren; und
eine Datenverarbeitungsschaltung (314), die konfiguriert ist, um die eine oder die mehreren Schnittstellen (312) zu steuern, wobei die Datenverarbeitungsschaltung (314) ferner konfiguriert ist, um eines der Verfahren (200) nach den Ansprüchen 1 bis 8 auszuführen.

14. Einrichtung (510) für ein Fahrzeug (500), die Einrichtung (510) umfassend:
eine oder mehrere Schnittstellen (512), die konfiguriert sind, um in einem Kommunikationsnetzwerk zu kommunizieren; und
eine Datenverarbeitungsschaltung (514), die konfiguriert ist, um die eine oder die mehreren Schnittstellen (512) zu steuern, wobei die Datenverarbeitungsschaltung (514) ferner konfiguriert ist, um eines der Verfahren (400) nach den Ansprüchen 9 bis 11 auszuführen.

## Revendications

1. Procédé (200) destiné à un centre de commande à distance (300) et permettant de commander un véhicule à distance, le procédé (200) comprenant :
l'établissement (210) d'une session de conduite télécommandée entre le véhicule et le centre de commande à distance (200) ;
l'obtention (220) d'informations (612) relatives à un minutage d'un événement de trafic prévisible ;
la détermination (230) d'un retard pour commander le véhicule dans la session de conduite télécommandée ; et
la commande (240) du véhicule dans la session de conduite télécommandée avant que l'événement de trafic prévisible se produise sur la base des informations (612) relatives au minutage et du retard.

2. Procédé (200) selon la revendication 1, dans lequel les informations (612) relatives à un minutage comprennent des informations relatives à un minutage d'un feu de circulation (610).

3. Procédé (200) selon la revendication 2, dans lequel la commande (240) du véhicule comprend le fait de donner instruction au véhicule, sur la base des informations (612) relatives au minutage et du retard, de s'arrêter au niveau du feu de circulation (610) ou de passer au feu de circulation (610).

4. Procédé (200) selon la revendication 2 ou 3, dans lequel la commande (240) du véhicule comprend le fait de donner instruction au véhicule, sur la base des informations (612) relatives au minutage et du retard, de démarrer le véhicule au niveau du feu de circulation (610).

5. Procédé (200) selon l'une quelconque des revendications 2 à 4, dans lequel les informations (612) relatives au minutage comprennent un message de phase et de minutage de signal, SPaT.

6. Procédé (200) selon l'une quelconque des revendications précédentes, dans lequel l'obtention (220) des informations (612) relatives au minutage comprend la réception des informations (612) relatives au minutage à partir du véhicule, d'un autre véhicule, ou d'un objet d'infrastructure.

7. Procédé (200) selon l'une quelconque des revendications précédentes, dans lequel la détermination (230) du retard comprend :
la détermination d'une latence de communication entre le centre de commande à distance (300) et le véhicule ;
la réception, à partir du véhicule, d'un retard de réaction dans la commande du véhicule dans la session de conduite télécommandée ; et
la détermination du retard dans la commande du véhicule à l'aide de la latence et du retard de réaction.

8. Procédé (200) selon l'une quelconque des revendications précédentes, dans lequel le procédé (200) comprend en outre le stockage des informations (612) relatives au minutage de l'événement de trafic prévisible.

9. Procédé (400) destiné à un véhicule, le procédé (400) comprenant :
l'établissement (410) d'une session de conduite télécommandée entre le véhicule et un centre de commande à distance (300) ;
l'obtention (420) d'informations (612) relatives au minutage d'un événement de trafic prévisible ;
la détermination (430) d'un retard de réaction pour une réaction du véhicule à une situation dans l'environnement dans la session de commande télécommandée ; et
la transmission (440) des informations (612) relatives au minutage et du retard de réaction au centre de commande à distance (300) pour commander le véhicule dans la session de conduite télécommandée avant que l'événement de trafic prévisible se produise sur la base des informations (612) relatives au minutage et du retard de réaction.

10. Procédé (400) selon la revendication 9, dans lequel l'obtention (420) d'informations (612) relatives au minutage comprend la réception des informations (612) relatives au minutage à partir d'un autre véhicule ou d'un objet d'infrastructure.

11. Procédé (400) selon la revendication 9 ou 10, dans lequel le procédé (400) comprend en outre le stockage des informations (612) relatives au minutage dans une base de données locale sur le véhicule.

12. Produit-programme informatique ayant un code de programme permettant de réaliser au moins l'un parmi les procédés (200, 400) selon les revendications 1 à 11, lorsque le produit-programme informatique est exécuté sur un ordinateur, un processeur ou un composant matériel programmable.

13. Appareil (310) destiné à un centre de commande à distance (300), l'appareil (310) comprenant :
une ou plusieurs interfaces (312) configurées pour communiquer dans un réseau de communication ; et
un circuit de traitement de données (314) configuré pour commander la ou les interfaces (312), dans lequel le circuit de traitement de données (314) est en outre configuré pour exécuter l'un des procédés (200) selon les revendications 1 à 8.

14. Appareil (510) destiné à un véhicule (500), l'appareil (510) comprenant :
une ou plusieurs interfaces (512) configurées pour communiquer dans un réseau de communication ; et
un circuit de traitement de données (514) configuré pour commander la ou les interfaces (512), dans lequel le circuit de traitement de données (514) est en outre configuré pour exécuter l'un des procédés (400) selon les revendications 9 à 11.
